(19) Europäisches Patentamt / European Patent Office / Office européen des brevets

(11) **EP 3 040 739 B1**

(12) **EUROPEAN PATENT SPECIFICATION**

(45) Date of publication and mention
of the grant of the patent:
**18.07.2018 Bulletin 2018/29**

(21) Application number: **14840072.4**

(22) Date of filing: **28.08.2014**

(51) Int Cl.:
*G01T 3/06* (2006.01)    *C09K 11/64* (2006.01)
*G21K 4/00* (2006.01)    *C09K 11/02* (2006.01)

(86) International application number:
**PCT/JP2014/004428**

(87) International publication number:
**WO 2015/029439 (05.03.2015 Gazette 2015/09)**

(54) **NEUTRON SCINTILLATOR AND NEUTRON DETECTOR**

NEUTRONENSZINTILLATOR UND NEUTRONENDETEKTOR

SCINTILLATEUR À NEUTRONS ET DÉTECTEUR DE NEUTRONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2013 JP 2013178956**

(43) Date of publication of application:
**06.07.2016 Bulletin 2016/27**

(73) Proprietor: **Tokuyama Corporation
Shunan-shi, Yamaguchi 745-8648 (JP)**

(72) Inventors:
• **FUKUDA, Kentaro
Shunan-shi
Yamaguchi 745-8648 (JP)**
• **ISHIZU, Sumito
Shunan-shi
Yamaguchi 745-8648 (JP)**
• **SAITO, Hiroaki
Shunan-shi
Yamaguchi 745-8648 (JP)**

(74) Representative: **Markfort, Iris-Anne Lucie
Lorenz & Kollegen
Patentanwälte Partnerschaftsgesellschaft mbB
Alte Ulmer Straße 2
89522 Heidenheim (DE)**

(56) References cited:
EP-A1- 2 256 177        EP-A2- 2 461 186
WO-A1-2014/092202    JP-A- 2005 200 460
JP-A- 2007 070 496      JP-A- 2007 070 496
US-A1- 2009 140 158    US-A1- 2010 224 783
US-A1- 2013 193 329

**Description**

Technical Field

The present invention relates to a neutron scintillator and a neutron detector that uses the neutron scintillator, more specifically, to a novel neutron scintillator and neutron detector that exhibit a high neutron detection efficiency and are capable of accurately measuring neutrons even at a place where a radiation dose of $\gamma$ rays as background noises is high.

Background Art

Neutron detectors are element technologies that support a neutron usage technology, and neutron detectors having higher performance are being demanded along with the development of the neutron usage technology in a security field such as a cargo inspection, an academic research field such as a structure analysis using a neutron diffraction, a nondestructive inspection field, a medical field such as a boron-neutron capture therapy, and the like.

As important properties required in such neutron detectors, there are a neutron detection efficiency and a discrimination ability between neutrons and $\gamma$ rays (hereinafter, also referred to as n/$\gamma$ discrimination ability). The neutron detection efficiency is a ratio of the number of neutrons counted by the detector to the number of neutrons that have entered the detector, and an absolute number of neutrons to be measured becomes small when the detection efficiency is low to eventually lower the measurement accuracy. Moreover, since the $\gamma$ rays not only exist as natural radiation but are also generated when neutrons bump into a structural member of the detection system for detecting neutrons or an inspection target, if the n/$\gamma$ discrimination ability is low, the neutron count accuracy is lowered when the $\gamma$ rays are counted as the neutrons.

When detecting neutrons, since the neutrons hardly interact with and transmit through a substance, the neutrons are generally detected using a neutron capture reaction. For example, there is known from the past a helium-3 detector that detects neutrons using tritium and protons generated by the neutron capture reaction between helium-3 and neutrons. Such a detector is a proportional counter filled with helium-3 gas, that has a high detection efficiency and an excellent n/$\gamma$ discrimination ability, but there have been problems in that helium-3 is an expensive substance and that the amount of resources is limited.

In recent years, a neutron detector that uses a neutron scintillator is being developed in place of the helium-3 detector. The neutron scintillator is a substance that emits fluorescence by an interaction with neutrons when the neutrons enter. The neutron detector can be obtained by combining the neutron scintillator and an optical detector such as a photomultiplier tube. It should be noted that the various types of performance of the neutron detector that uses the neutron scintillator depend on the substances constituting the neutron scintillator. For example, if a large amount of isotopes having a high efficiency in the neutron capture reaction is contained, the neutron detection efficiency is raised. Examples of the isotope include lithium-6 and boron-10 (see, for example, Patent Document 1).

In the neutron detector, light emitted from the neutron scintillator is detected by the optical detector, and pulse signals are output from the optical detector. In general, the number of neutrons is measured based on the pulse signal intensity, specifically, a so-called pulse height. By setting a predetermined threshold value for the pulse height, an event showing a pulse height exceeding the threshold value is counted as a neutron incident event, and an event showing a pulse height smaller than the threshold value is handled as noises.

Additional solutions are known from Patent Documents 2, 3 and 4. Especially, Patent Document 2 discloses a scintillator system that is provided to detect the presence of fissile material and radioactive material. One or more neutron detectors are based on 6LiF mixed in a binder medium with scintillator material, and are optically coupled to one or more wavelength shifting fiber optic light guide media that have a tapered portion extending from the scintillator material to guide light from the scintillator material to a photosensor at the tapered portion. An electrical output of the photosensor is connected to an input of a first pre-amp circuit designed to operate close to a pulse shape and duration of a light pulse from the scintillator material, without signal distortion. The scintillator material includes a set of scintillation layers connected to the wavelength shifting fiber optic light guide media that guide light to the photosensor. Moderator material is applied around the set of scintillation layers increasing detector efficiency.

Patent Document 1: WO 2009/119378,
Patent Document 2: US 2010/224783 A1,
Patent Document 3: US 2009/140158 A1, and
Patent Document 4: US 2013/193329 A1.

Summary of Invention

Problem to be solved by the Invention

However, the neutron detector that uses the neutron scintillator has had a problem that while there is an advantage that the neutron detection efficiency is high, the n/γ discrimination ability is poor since the scintillator is also sensitive to γ rays.

Therefore, the present invention aims at providing a neutron scintillator having an excellent neutron/γ ray discrimination ability. Means for solving the Problem

Specifically, according to the present invention, there is provided a neutron scintillator, characterized by including a resin composition including

inorganic fluorescent substance particles including at least one type of neutron capture isotope selected from lithium-6 and boron-10, and

a fluorescent substance that does not include the neutron capture isotope and has a different fluorescence property from the inorganic fluorescent substance particles.

Effect of the Invention

According to the present invention, a sufficient neutron/γ ray discrimination ability can be obtained.

Brief Description of Drawings

[Fig. 1] A diagram schematically showing a method of measuring an internal transmittance according to an example.
[Fig. 2] A diagram showing a signal waveform obtained when neutrons are irradiated onto a neutron detector obtained in Example 1.
[Fig. 3] A diagram showing a signal waveform obtained when γ rays are irradiated onto the neutron detector obtained in Example 1.
[Fig. 4] A pulse height spectrum obtained without using a waveform analysis mechanism in Example 1.
[Fig. 5] A pulse height spectrum obtained using the waveform analysis mechanism in Example 1.
[Fig. 6] A pulse height spectrum obtained without using the waveform analysis mechanism in Example 2.
[Fig. 7] A pulse height spectrum obtained using the waveform analysis mechanism in Example 2.

Modes for Carrying Out the Invention

As described above, the neutron detector that uses the neutron scintillator has had a problem that while there is an advantage that the neutron detection efficiency is high, the n/γ discrimination ability is poor since the scintillator is also sensitive to γ rays.

To solve such a problem, there is proposed a neutron scintillator constituted of a resin composition that includes inorganic fluorescent substance particles including at least one type of neutron capture isotope selected from lithium-6 and boron-10 and has a high optical transparency with respect to scintillation light (Japanese Patent Application No. 2012-271318).

The neutron scintillator constituted of the resin composition has a high neutron detection efficiency and an excellent neutron/γ ray discrimination ability, but the transparency of the resin composition itself is required to be high.

To obtain high transparency of the resin composition, theoretically, a refractive index of the resin and that of the inorganic fluorescent substance particles need to match.

However, there is a limit in control of the refractive index of the resin as an organic substance and also a limit in providing a resin with a matching refractive index with respect to all of the various inorganic fluorescent substance particles. Moreover, if the resin composition is adjusted for the purpose of controlling physical properties of the resin composition other than the refractive index, it may be difficult to make the refractive indices match in many cases.

Further, the refractive index has a temperature dependency that varies for each substance. Therefore, even when the refractive indices match at room temperature, a difference may be caused between the refractive index of the resin and that of the inorganic fluorescent substance particles when a use temperature is other than the room temperature, which eventually causes the transparency to be lost. Of course, when the use temperature is constant, the refractive indices only need to match at the use temperature, but the neutron detector for outdoor use or the like is used within the temperature range of several-ten degrees or more in many cases.

Alternatively, even when the refractive index of the resin and that of the inorganic fluorescent substance particles match, if minute air bubbles are mixed in the resin composition, there is a strong tendency that the transparency will be lowered.

Furthermore, there has been a problem that if the transparency of the resin composition becomes insufficient due to those factors, fluorescence due to neutrons is not sufficiently guided to the optical detector and the neutron/$\gamma$ ray discrimination ability becomes insufficient.

Therefore, the present invention aims at providing a neutron scintillator having an excellent neutron/$\gamma$ ray discrimination ability even when an optical transparency of the resin composition is poor due to a discrepancy of refractive indices and the like and fluorescence due to neutrons cannot be taken out sufficiently.

In view of the circumstances as described above, the inventors of the present invention have made intensive studies and found out that the neutron/$\gamma$ ray discrimination becomes easy by incorporating, in addition to the inorganic fluorescent substance particles, a fluorescent substance not including a neutron capture ability and analyzing a difference between the fluorescence properties of the fluorescent substances, and completed the present invention.

Specifically, according to the present invention, there is provided a neutron scintillator, characterized by including a resin composition including

inorganic fluorescent substance particles including at least one type of neutron capture isotope selected from lithium-6 and boron-10, and
a fluorescent substance that does not include the neutron capture isotope and has a different fluorescence property from the inorganic fluorescent substance particles.

According to the present invention, a sufficient neutron/$\gamma$ ray discrimination ability can be obtained even when an optical transparency of the resin composition is insufficient. Therefore, there is no need to forcibly make the refractive index of the resin and that of the inorganic fluorescent substance particles match or completely remove air bubbles.

As a result, a high-performance neutron scintillator can be produced easier than in the past.

Hereinafter, a neutron scintillator according to an embodiment of the present invention will be described.

The neutron scintillator of this embodiment includes, as a first structural element, inorganic fluorescent substance particles including at least one type of neutron capture isotope selected from lithium-6 and boron-10 (hereinafter, also referred to as inorganic fluorescent substance particles).

In the inorganic fluorescent substance particles, $\alpha$ rays and tritium or $\alpha$ rays and lithium-7 (hereinafter, also referred to as secondary particles) are generated by a neutron capture reaction of lithium-6 or boron-10 with the neutrons, and 4.8 MeV or 2.3 MeV energy is imparted to the inorganic fluorescent substance particles by the secondary particles. By imparting the energy, the inorganic fluorescent substance particles are excited to emit fluorescence.

Since the neutron scintillator that uses the inorganic fluorescent substance particles has a high efficiency in the neutron capture reaction by lithium-6 and boron-10, the neutron scintillator has an excellent neutron detection efficiency. In addition, since the energy imparted to the inorganic fluorescent substance particles after the neutron capture reaction is high, the intensity of fluorescence emitted when neutrons are detected is excellent.

In this embodiment, contents of lithium-6 and boron-10 in the inorganic fluorescent substance particles (hereinafter, also referred to as neutron capture isotope contents) are favorably 1 atom/$nm^3$ and 0.3 atom/$nm^3$ or more, respectively, more favorably 6 atom/$nm^3$ and 2 atom/$nm^3$ or more, respectively. It should be noted that the neutron capture isotope content is the number of neutron capture isotopes included per 1 $nm^3$ of the inorganic fluorescent substance particles. By setting the neutron capture isotope content within the range described above, the possibility of the incident neutrons causing the neutron capture reaction becomes high, and the neutron detection efficiency is thus improved.

The neutron capture isotope content can be appropriately adjusted by selecting a chemical composition of the inorganic fluorescent substance particles and adjusting isotope ratios of lithium-6 and boron-10 in lithium fluoride (LiF), boron oxide ($B_2O_3$), and the like that are used as raw materials of the inorganic fluorescent substance particles. Here, the isotope ratios are an element ratio of lithium-6 isotopes to all lithium elements and an element ratio of boron-10 isotopes to all boron elements and are, regarding natural lithium and boron, about 7.6% and about 19.9%, respectively. As a method of adjusting the neutron capture isotope content, there are a method of condensing, using a general-purpose material having a natural isotope ratio as a starting material, the isotope ratios of lithium-6 and boron-10 to desired isotope ratios, and a method of preparing a condensed material obtained by condensing the isotope ratios of lithium-6 and boron-10 to desired isotope ratios or more and mixing the condensed material and the general-purpose material for the adjustment.

On the other hand, the upper limit of the neutron capture isotope content is not particularly limited, but is favorably set to be 60 atom/$nm^3$ or less. For attaining the neutron capture isotope content exceeding 60 atom/$nm^3$, there is a need to use a large amount of a special raw material whose neutron capture isotopes are condensed to a high concentration in advance. Therefore, production costs become extremely high, and a selection of the type of inorganic fluorescent substance particles is also limited significantly.

It should be noted that the contents of lithium-6 and boron-10 in the inorganic fluorescent substance particles can be obtained by obtaining in advance a density of the inorganic fluorescent substance particles, a mass fraction of lithium and boron in the inorganic fluorescent substance particles, and an isotope ratio of lithium-6 and boron-10 in the raw material and substituting them into the following expressions (1) and (2).

$$\mathrm{Content\ of\ lithium\text{-}6} = \rho * W_{Li} * C_{Li} / (700 - C_{Li}) * A * 10^{-23} \quad (1)$$

$$\mathrm{Content\ of\ boron\text{-}10} = \rho * W_{B} * C_{B} / (1100 - C_{B}) * A * 10^{-23} \quad (2)$$

(in the expressions, $\rho$ represents the scintillator density (g/cm$^3$), $W_{Li}$ and $W_B$ represent mass fractions (mass%) of lithium and boron in the inorganic fluorescent substance particles, $C_{Li}$ and $C_B$ represent isotope ratios (%) of lithium-6 and boron-10 in the raw materials, and A represents the Avogadro number ($6.02*10^{23}$))

The inorganic fluorescent substance particles are not particularly limited, and well-known inorganic fluorescent substance particles of the related art can be used. Specific examples thereof include inorganic fluorescent substance particles constituted of crystals of Eu:LiCaAlF$_6$, Eu, Na:LiCaAlF$_6$, Eu:LiSrAlF$_6$, Ce:LiCaAlF$_6$, Ce, Na:LiCaAlF$_6$, Ce:LiSrAlF$_6$, Ce:LiYF$_4$, Eu:LiI, Ce:Li$_6$Gd(BO$_3$)$_3$, Ce:LiCs$_2$YCl$_6$, Ce:LiCs$_2$YBr$_6$, Ce:LiCs$_2$LaCl$_6$, Ce:LiCs$_2$LaBr$_6$, Ce:LiCs$_2$CeCl$_6$, Ce:LiRb$_2$LaBr$_6$, and the like and inorganic fluorescent substance particles constituted of Li$_2$O-MgO-Al$_2$O$_3$-SiO$_2$-Ce$_2$O$_3$-based glass.

In this embodiment, the wavelength of light that the inorganic fluorescent substance particles emit is favorably within a near-ultraviolet range to a visible light range considering the point that transparency is easily obtained when mixed with a resin as will be described later, particularly favorably the visible light range.

In this embodiment, it is favorable for the neutron capture isotope to be included in the inorganic fluorescent substance particles to be lithium-6 alone. When the neutron capture isotope that contributes to the neutron capture reaction is lithium-6 alone, constant energy can constantly be imparted to the inorganic fluorescent substance particles, and energy as high as 4.8 MeV can be imparted. Therefore, there are less variances in the fluorescence intensity, and a neutron scintillator having an excellent fluorescence intensity in particular can be obtained.

Of the inorganic fluorescent substance particles including only lithium-6 as the neutron capture isotope, a colquiriite-type crystal that is represented by a chemical formula LiM$^1$M$^2$X$_6$ (provided that M$^1$ represents at least one type of alkali earth metal element selected from Mg, Ca, Sr, and Ba, M$^2$ represents at least one type of metal element selected from Al, Ga, and Sc, and X represents at least one type of halogen element selected from F, Cl, Br, and I) and includes at least one type of lanthanoid element and a colquiriite-type crystal that is the same as that described above and additionally includes at least one type of alkali metal are favorable.

Specifically exemplifying the colquiriite-type crystal, inorganic fluorescent substance particles constituted of Eu:LiCaAlF$_6$, Eu, Na:LiCaAlF$_6$, Eu:LiSrAlF$_6$, and Eu, Na:LiSrAlF$_6$ are most favorable since the amount of luminescence is high and there is no deliquescent property so as to be chemically stable.

As first means for raising the n/$\gamma$ discrimination ability of the neutron scintillator, this embodiment is characterized in that the inorganic fluorescent substance is in a form of particles. Hereinafter, a mechanism for raising the n/$\gamma$ discrimination ability by using the inorganic fluorescent substance particles will be described.

In general, when $\gamma$ rays enter the scintillator, fast electrons are generated inside the scintillator. By the fast electrons imparting energy to the inorganic fluorescent substance particles, the inorganic fluorescent substance particles emit light. If the pulse height output by the emission is comparable with that obtained by the incident neutrons and therefore cannot be discriminated, the $\gamma$ rays are counted as neutrons to thus cause an error in the neutron count. Particularly when the dose of $\gamma$ rays is high, an error due to the $\gamma$ rays increases and notably becomes a problem.

Since the pulse height output from the neutron detector by the entering of $\gamma$ rays depends on the energy imparted by the fast electrons, the pulse height output when the $\gamma$ rays enter the neutron scintillator can be lowered by lowering the energy.

Here, a range distance by which the fast electrons generated when the $\gamma$ rays enter the scintillator move in the scintillator while imparting energy to the scintillator is relatively long and is about a few mm. Since the inorganic fluorescent substance particles are used in the neutron scintillator of this embodiment, the fast electrons generated when the $\gamma$ rays enter the inorganic fluorescent substance particles deviate from the inorganic fluorescent substance particles before all of the energy is imparted. Therefore, the energy imparted to the inorganic fluorescent substance particles from the fast electrons is reduced, and the pulse height output when the $\gamma$ rays enter becomes lower than that obtained when the neutrons enter. As a result, the n/$\gamma$ discrimination ability is improved.

In this embodiment, the shape of the inorganic fluorescent substance particles is not particularly limited as long as the fast electrons generated by the entering of $\gamma$ rays deviate from the inorganic fluorescent substance particles and the n/$\gamma$ discrimination ability is improved as described above. In general, the smaller the size, the more rapidly the fast electrons deviate from the inorganic fluorescent substance particles so as to improve the n/$\gamma$ discrimination ability. However, since the inorganic fluorescent substance particles take various particle shapes such as a flat plate-like shape, a square column shape, a column shape, and a spherical shape according to the types and production methods thereof and the easiness of the fast electrons in deviating differs depending of the particle shape, it is generally difficult to grasp the most favorable shape for causing the fast electrons to rapidly deviate from the inorganic fluorescent substance particles.

According to the studies of the present inventors, the shape of the inorganic fluorescent substance particles is favorably a shape having a specific surface area of 50 cm$^2$/cm$^3$ or more, particularly favorably 100cm$^2$/cm$^3$ or more. It should be noted that in this embodiment, the specific surface area of the inorganic fluorescent substance particles refers to a surface area per unit volume of the inorganic fluorescent substance particles.

Here, since the specific surface area in this embodiment is the surface area per unit volume, (1) the specific surface area is apt to increase as an absolute volume of the inorganic fluorescent substance particles decreases and (2) becomes smallest when the shape is a sphere, and conversely, as the specific surface area of the inorganic fluorescent substance particles increases, the inorganic fluorescent substance particles take a shape that is farther away from the sphere. For example, considering a cube having sides extending in X-, Y-, and Z-axis directions, the specific surface area is smallest in the case of a cube with X = Y = Z. When the length of the sides of any of the axis directions is shortened and the sides of any of the other axis directions is prolonged that much, the specific surface area becomes large even with the same volume.

More specifically, while a cube having one side of 0.5 cm has a specific surface area of 12 cm$^2$/cm$^3$, a cube having one side of 0.1 cm (0.001 cm$^3$) has a specific surface area of 60 cm$^2$/cm$^3$. Further, when the thickness is set to 0.025 cm with the same volume (0.001 cm$^3$), the size becomes 0.2*0.2 cm regarding the height and width, and the specific surface area becomes 100 cm$^2$/cm$^3$.

In other words, a large specific surface area means that there is a part where the length of at least one axis direction is extremely small. In addition, since the fast electrons excited by the $\gamma$ rays that travel in the small axis direction and directions close to that axis direction rapidly deviate from the crystals as described above, the energy imparted to the inorganic fluorescent substance particles from the fast electrons can be reduced.

The favorable shape of the inorganic fluorescent substance particles based on the specific surface area has been found by the above findings and considerations. The specific surface area can be used as an index for shapes while taking into account that the inorganic fluorescent substance particles take various particle shapes, in considering the energy to be imparted to the inorganic fluorescent substance particles from the fast electrons. In terms of practical use, the specific surface area is favorably set to be 50 cm$^2$/cm$^3$ or more, more favorably 100 cm$^2$/cm$^3$ or more. Consequently, a neutron detector having an excellent n/$\gamma$ discrimination ability in particular can be obtained.

It should be noted that in this embodiment, the upper limit of the specific surface area is not particularly limited but is favorably 1000 cm$^2$/cm$^3$ or less. When the specific surface area exceeds 1000 cm$^2$/cm$^3$, that is, lengths of the inorganic fluorescent substance particles in all the axis directions are extremely small, there is a fear that secondary particles generated by the neutron capture reaction of lithium-6 and boron-10 with the neutrons may deviate from the inorganic fluorescent substance particles before all the energy is imparted to the inorganic fluorescent substance particles. Since the energy imparted to the inorganic fluorescent substance particles by the entering of neutrons is lowered in such an event, the emission intensity of the inorganic fluorescent substance particles is lowered. To positively impart all the energy of the secondary particles to the inorganic fluorescent substance particles and raise the emission intensity of the inorganic fluorescent substance particles, the specific surface area of the inorganic fluorescent substance particles is particularly favorably set to be 500 cm$^2$/cm$^3$ or less.

It should be noted that the term axis used in the descriptions above is merely used for convenience in indicating the X, Y, and Z spatial coordinate positions, and the inorganic fluorescent substance particles used in this embodiment are not limited to a cube having sides in those particular axis directions.

Moreover, when the inorganic fluorescent substance particles have an indefinite shape, the specific surface area can be easily obtained from a density and a specific surface area of a mass scale, that are obtained using a densimeter and a BET specific surface area analyzer.

Further, defining the size of the inorganic fluorescent substance particles used in this embodiment from another viewpoint, it is favorable for the inorganic fluorescent substance particles to be particles that all pass through a sieve having an opening of 2 mm and substantially do not include particles that pass through a sieve having an opening of 100 $\mu$m, and more favorable to be particles that all pass through a sieve having an opening of 1000 $\mu$m and substantially do not include particles that pass through a sieve having an opening of 100 $\mu$m. Here, the expression "substantially do not include particles that pass through a sieve having an opening of 100 $\mu$m" means that the mass change at a time the particles are shaken for 5 minutes in a sieve having the same opening size is 5% or less.

Examples of the shape of the inorganic fluorescent substance particles favorably used in this embodiment are a flat plate-like shape, a square column shape, a column shape, a spherical shape, and an indefinite shape, specifically, a shape whose equal specific surface area sphere-equivalent diameter is 50 to 1500 $\mu$m, particularly favorably 100 to 1000 $\mu$m.

The production method of the inorganic fluorescent substance particles is not particularly limited, and a method of pulverizing and classifying bulk bodies of an inorganic fluorescent substance having a larger shape than the inorganic fluorescent substance particles having the favorable shape and obtaining inorganic fluorescent substance particles of a desired shape or a method of directly obtaining inorganic fluorescent substance particles of a favorable shape by a particle generation reaction using a solution of an inorganic fluorescent substance as a starting material may be used.

Of the production methods described above, the method of pulverizing and classifying bulk bodies of an inorganic fluorescent substance is favorable for its high productivity and since favorable inorganic fluorescent substance particles can be obtained inexpensively. The method of pulverizing bulk bodies of an inorganic fluorescent substance is not particularly limited, and well-known pulverizers such as a hammer mill, a roller mill, a rotary mill, a ball mill, and a bead mill can be used without any limitations. Of those, a hammer mill and a roller mill are particularly favorable for suppressing generation of a so-called fine powder having an extremely large specific surface area and obtaining inorganic fluorescent substance particles having a specific surface area of favorably 1000 cm$^2$/cm$^3$ or less, particularly favorably 500 cm$^2$/cm$^3$ or less, as described above.

Furthermore, regarding the method of classifying the inorganic fluorescent substance particles obtained by pulverizing the bulk bodies of the inorganic fluorescent substance, well-known methods such as dry sieving, wet sieving, and air classification can be applied without any limitations.

The neutron scintillator of this embodiment is a resin composition including the inorganic fluorescent substance particles (hereinafter, also simply referred to as resin composition). As can be understood from the descriptions above, the inorganic fluorescent substance particles of this embodiment are smaller than a generally-used inorganic fluorescent substance having a neutron capture ability. Therefore, there is a problem that a single inorganic fluorescent substance particle has a poor neutron detection efficiency. Such a problem can be solved by mixing a plurality of inorganic fluorescent substance particles in the resin and dispersing them in the resin. As a result, a neutron scintillator having an excellent n/$\gamma$ discrimination ability and also a high neutron detection efficiency can be obtained.

The resin constituting the resin composition can be in a liquid or solid form but is favorably in a solid form within a use temperature range from room temperature in view of easiness in handling.

Specific examples of the resin usable in this embodiment include a silicone resin, a fluorine resin, poly(meta)acrylate, polycarbonate, polystyrene, polyvinyl toluene, and polyvinyl alcohol. In addition, a plurality of resins may be mixed for the purpose of adjusting the refractive index, strength, and the like.

In this embodiment, the ratio of the inorganic fluorescent substance particles in the resin composition is not particularly limited, but a volume fraction of the inorganic fluorescent substance particles in the resin composition is favorably 10% or more, particularly favorably 20% or more. By setting the volume fraction of the inorganic fluorescent substance particles in the resin composition to fall within that range, the neutron detection efficiency per unit volume of the resin composition can be improved. On the other hand, the volume fraction of the inorganic fluorescent substance particles in the resin composition is favorably 50% or less, particularly favorably 40% or less. By setting the volume fraction to be equal to or smaller than those values, it becomes easy to prevent the fast electron deviated from the inorganic fluorescent substance particle from entering another nearby inorganic fluorescent substance particle and emitting light.

The resin composition constituting the neutron scintillator of this embodiment has a favorable n/$\gamma$ discrimination ability as described above even when optical transmittance is low and thus an extraction efficiency of scintillation light due to neutrons is low. However, it is favorable to have an internal transmittance of at least 3% or more in the emission wavelength of the inorganic fluorescent substance particles, more favorably 5% or more, particularly favorably 10% or more.

Here, the internal transmittance is a transmittance from which a surface reflectance loss, that is generated on an incident-side surface and emission-side surface of the organic resin when light is transmitted through the organic resin, has been removed and is expressed by a value per 1 cm in an optical path length. The internal transmittance ($\tau_{10}$) per 1 cm in the optical path length can be obtained by measuring transmittances including surface reflectance losses of a pair of organic resins having different thicknesses and substituting them in the following expression (3).

$$\log(\tau_{10}) = \{\log(T_2) - \log(T_1)\}/(d_2 - d_1) \quad (3)$$

In the expression above, $d_1$ and $d_2$ represent the thicknesses of the pair of organic resins in a cm unit, and $d_2$

$> d_1$ is established. In addition, $T_1$ and $T_2$ represent the transmittances including the surface reflectance losses of the organic resins having the thicknesses $d_1$ and $d_2$.

The upper limit of the internal transmittance is not particularly limited and may be as high as 90 to 100%, for example, but in this embodiment, the advantageous effect of the present invention is particularly high when the internal transmittance of the resin composition is smaller than 50%, particularly when it is smaller than 30%.

To raise the internal transmittance of the resin composition in this embodiment, it is favorable to use a resin that is transparent in the emission wavelength of the inorganic fluorescent substance particles (hereinafter, also simply referred to as transparent resin). More specifically, the internal transmittance of the resin in the emission wavelength of the inorganic fluorescent substance particles is favorably 80%/cm or more, particularly favorably 90%/cm or more. The internal transmittance of the resin can be obtained by a similar method as the resin composition described above using the resin alone as a sample. Specific examples of the transparent resin include a silicone resin, a fluorine resin, poly(meta)acrylate, polycarbonate, polystyrene, polyvinyl toluene, and polyvinyl alcohol. In addition, a plurality of resins may be mixed for the purpose of adjusting the refractive index.

It should be noted that the internal transmittance has an extremely strong tendency to be influenced by the refractive index ratio of the elements constituting the resin composition (resin, inorganic fluorescent substance particles, filler particles, etc.). In other words, in this embodiment, the refractive index of the resin and that of the inorganic fluorescent substance particles and/or the filler particles may differ by 10% or more in the emission wavelength of the inorganic fluorescent substance particles, and even with the difference of 20% or more, sufficient performance can be obtained.

The resin composition of this embodiment additionally includes, as a second feature, a fluorescent substance that does not include a neutron capture isotope and has a fluorescence property different from that of the inorganic fluorescent substance particles, in addition to the inorganic fluorescent substance particles and the resin.

The reasons are as follows. The fast electrons generated by the entering of the $\gamma$ rays to the scintillator not only cause the inorganic fluorescent substance particles to emit light but also reach a neutron-insensitive fluorescent substance to impart energy thereto so that the neutron-insensitive fluorescent substance also emits fluorescence. In other words, when the $\gamma$ rays enter, both the inorganic fluorescent substance particles and the neutron-insensitive fluorescent substance are imparted with energy so as to emit fluorescence. On the other hand, when the neutrons enter, secondary particles generated in the inorganic fluorescent substance particles hardly deviate from the inorganic fluorescent substance particles. Therefore, only the inorganic fluorescent substance particles emit fluorescence.

Further, since there is a difference in the fluorescence properties such as a fluorescence lifetime and emission wavelength between the inorganic fluorescent substance particles and the neutron-insensitive fluorescent substance, the neutrons and the $\gamma$ rays can be discriminated using the difference in the fluorescence properties. In other words, by providing a mechanism capable of identifying the difference in the fluorescence properties in the neutron detector, the case where both the fluorescence derived from the inorganic fluorescent substance particles and the fluorescence derived from the neutron-insensitive fluorescent substance are detected can be processed as an event in which the $\gamma$ rays have entered, and the case where only the fluorescence derived from the inorganic fluorescent substance particles is detected can be processed as an event in which the neutrons have entered. By such processing, a neutron detector having an excellent n/$\gamma$ discrimination ability can be obtained.

Specific examples of the mechanism capable of identifying the difference in the fluorescence properties include a waveform analysis mechanism capable of identifying a difference in the lifetimes of the inorganic fluorescent substance particles and the neutron-insensitive fluorescent substance and a wavelength analysis mechanism capable of identifying the emission wavelengths of the inorganic fluorescent substance particles and the neutron-insensitive fluorescent substance.

Hereinafter, the waveform analysis mechanism will be described in more detail while taking a case where the fluorescence lifetime of the neutron-insensitive fluorescent substance is shorter than the fluorescence lifetime of the inorganic fluorescent substance particles as an example.

In the neutron detector of this embodiment obtained by combining the neutron scintillator and the optical detector, signals output from the optical detector are pulse signals onto which the fluorescence lifetime of the neutron scintillator is reflected. Regarding the pulse signals, an integral value of the signal intensity, that is, a pulse height is acquired within the time range up to an elapse of a predetermined time since the rise of the signals. At this time, pulse heights are acquired within two different time ranges. The pulse height of a short time range is represented by $S_1$, and the pulse height of a long time range is represented by $S_2$. Since only the fluorescence derived from the inorganic fluorescent substance particles is observed in the event where the neutrons have entered, the pulse height ratio ($S_1/S_2$) depends on the lifetime of the inorganic fluorescent substance particles and takes a substantially constant value. In contrast, in the event where the $\gamma$ rays have entered, since the fluorescence derived from the neutron-insensitive fluorescent substance having a short lifetime is observed in addition to the fluorescence derived from the inorganic fluorescent substance particles, $S_1$ becomes relatively large as compared to the event where the neutrons have entered, and $S_1/S_2$ also becomes large. Therefore, by setting a threshold value for $S_1/S_2$, the case where $S_1/S_2$ exceeds the threshold value can be processed as the event where the $\gamma$ rays have entered, and the case where $S_1/S_2$ is equal to or smaller than the threshold value can be processed as the event where the neutrons have entered. Specifically, the neutrons and $\gamma$ rays only need to be discriminated by digitizing and recording signals output from the optical detector by a digital oscilloscope, a high-speed digitizer, and the like and calculating the $S_1/S_2$ from the recorded digital signals. Alternatively, the signals output from the optical detector only need to be input to two analog/digital converters having different integration time constants so that $S_1$ and $S_2$ are acquired and $S_1/S_2$ is obtained sequentially.

A different form of the waveform analysis mechanism will be described. First, the signals output from the optical detector are input to a main amplifier via a pre-amplifier to be amplified and shaped. Here, the intensity of the signals amplified and shaped by the main amplifier and output from the main amplifier increases with time, but the time required for such an increase (hereinafter, also referred to as rise time) reflects the fluorescence lifetime of the inorganic fluorescent substance particles or the neutron-insensitive fluorescent substance, and thus the rise time becomes shorter as the fluorescence lifetime becomes shorter.

For analyzing the rise time, the signals amplified and shaped by the main amplifier are input to a waveform analyzer. The waveform analyzer performs a time integration on the signals input from the main amplifier and outputs logic signals when the signal intensity obtained by the time integration exceeds a predetermined threshold value. Here, two steps of threshold values are set in the waveform analyzer, and a first logic signal and a second logic signal are output with a certain time interval.

Next, the two logic signals output from the waveform analyzer are input to a time-to-amplitude converter (TAC), and a time difference between the two logic signals output from the waveform analyzer is converted into a pulse amplitude and output. The pulse amplitude reflects the time interval between the first logic signal and the second logic signal output from the waveform analyzer, that is, the rise time.

As can be understood from the descriptions above, in the event where the $\gamma$ rays have entered, since the fluorescence of the neutron-insensitive fluorescent substance having a short lifetime is observed, the rise time becomes relatively shorter than that in the event where the neutrons have entered, and thus the pulse amplitude output from the time-to-amplitude converter also becomes small. Therefore, by setting a threshold value for the pulse amplitude, the case where the pulse amplitude is smaller than the threshold value can be processed as the event where the $\gamma$ rays have entered, and the case where the pulse amplitude is equal to or larger than the threshold value can be processed as the event where the neutrons have entered.

Hereinafter, the wavelength analysis mechanism will be exemplified in more detail. The wavelength analysis mechanism is constituted of an optical filter, a second optical detector that is connected to the neutron scintillator via the optical filter, and a discrimination circuit.

In this configuration, part of light emitted from the neutron scintillator is guided to the first optical detector without passing through the optical filter, and other part is guided to the second optical detector via the optical filter.

Here, it is assumed that the inorganic fluorescent substance particles emit light in an A nm wavelength, and the neutron-insensitive fluorescent substance emits light in a B nm wavelength different from A nm. As a result, since both the inorganic fluorescent substance particles and the neutron-insensitive fluorescent substance emit fluorescence when the $\gamma$ rays enter as described above, A nm and B nm light are emitted from the neutron scintillator. Since only the inorganic fluorescent substance particles emit fluorescence when the neutrons enter, only the A nm light is emitted from the neutron scintillator.

In this configuration, the optical filter is a filter that blocks light having the A nm wavelength and transmits light having the B nm wavelength. Therefore, the A nm light emitted from the neutron scintillator when the neutrons are irradiated reaches the first optical detector but does not reach the second optical detector since the light is blocked by the optical filter. On the other hand, while the A nm light out of the light emitted from the scintillator when the $\gamma$ rays are irradiated is similar to the case where the neutrons are irradiated, the B nm light reaches the first optical detector and also reaches the second optical detector since the light is transmitted through the optical filter.

Therefore, when a signal is not output from the second optical detector at the time the A nm light enters the first optical detector and a signal is output from the optical detector, the event can be identified as the event caused by the neutrons, and when the B nm light enters the second optical detector and a signal is output from the second optical detector, the event can be identified as the event caused by the $\gamma$ rays.

It should be noted that in this configuration, the discrimination circuit for discriminating the neutrons and $\gamma$ rays is provided as described above. The discrimination circuit is a circuit that operates in sync with the signals from the first optical detector and judges whether there is a signal from the second optical detector when a signal from the first optical detector is output. Specific examples of the discrimination circuit include an anti-coincidence circuit and a gate circuit.

A well-known fluorescent substance can be used as the neutron-insensitive fluorescent substance used in this embodiment without any particular limit, but an inorganic substance particle or organic substance can be used favorably.

The neutron-insensitive fluorescent substance constituted of an inorganic substance particle (hereinafter, referred to as neutron-insensitive fluorescent substance particles) are favorable since various fluorescence lifetimes and emission wavelengths can be obtained depending on the type thereof. Further, as the neutron-insensitive fluorescent substance particles, particles that are constituted of the same inorganic substance as the inorganic fluorescent substance particles and have the fluorescence lifetime or emission wavelength changed by changing the type or concentration of the dopant is most favorable. In other words, since the refractive index of the neutron-insensitive fluorescent substance particles matches that of the inorganic fluorescent substance particles, it becomes easy to match the refractive index with the resin, and thus a resin composition having a particularly high internal transmittance can be obtained. Furthermore, a function as filler particles to be described later can be imparted to the neutron-insensitive fluorescent substance particles.

On the other hand, the neutron-insensitive fluorescent substance constituted of an organic substance is favorable since it dissolves in the resin composition and is easily dispersed uniformly and that it has a high optical transparency. Further, since the fluorescent substance constituted of the organic substance generally has a shorter fluorescence lifetime than the inorganic fluorescent substance particles, it can be favorably used for improving the n/γ discrimination ability using the difference in the fluorescence lifetimes.

Specific examples of the neutron-insensitive fluorescent substance constituted of an organic substance include organic fluorescent substances such as 2,5-Dipheniloxazole, 1,4-Bis(5-phenyl-2-oxazolyl)benzene, 1,4-Bis(2-methylstyryl)benzene, anthracene, stilbene, naphthalene, and derivatives thereof.

The content of the neutron-insensitive fluorescent substance can be set as appropriate within the range in which the effects of this embodiment are exerted and is favorably set to be 0.01 mass% or more, particularly favorably 0.1 mass% or more, with respect to 100 mass% of the resin. By setting the content to be 0.01 mass% or more, the neutron-insensitive fluorescent substance is efficiently excited by the energy imparted from the fast electrons, and the intensity of emission from the neutron-insensitive fluorescent substance increases. Moreover, although the upper limit of the content of the neutron-insensitive fluorescent substance is not particularly limited, the upper limit is favorably set to be 10 mass% or less, more favorably 5 mass% or less, particularly favorably 2 mass% or less with respect to the resin, for the purpose of preventing an attenuation of the emission intensity of the neutron-insensitive fluorescent substance due to concentration quenching. By setting the content of the neutron-insensitive fluorescent substance within those ranges, the intensity of emission from the neutron-insensitive fluorescent substance increases, and it becomes easy to discriminate the neutrons and γ rays using the difference in the fluorescence property from the inorganic fluorescent substance particles.

The neutron scintillator constituted of the resin composition of this embodiment may include non-fluorescent particles (hereinafter, referred to as filler particles) for an adjustment of intervals of the inorganic fluorescent substance particles, a viscosity adjustment of a liquid resin or a solid resin before curing, and an adjustment of various other physical properties.

Specific examples of the filler particles include inorganic particles of silica, titanium oxide, barium sulfate, calcium fluoride, magnesium fluoride, lithium fluoride, magnesium carbonate, strontium fluoride, mica, and various glasses, and organic particles of a silicone resin, a fluorine resin, poly(meta)acrylate, polycarbonate, polystyrene, polyvinyl toluene, polyvinyl alcohol, polyethylene, and styrene-butadiene.

As the filler particles, filler particles constituted of an inorganic substance that is of the same type as the inorganic fluorescent substance particles and has no doping element are most favorable. Specifically, since a specific gravity of the filler particles constituted of an inorganic substance that is of the same type as the inorganic fluorescent substance particles matches that of the inorganic fluorescent substance particles, the inorganic fluorescent substance particles can be uniformly dispersed in the resin composition. Furthermore, since the refractive index of the filler particles matches that of the inorganic fluorescent substance particles, if a resin having a refractive index close to that of the inorganic fluorescent substance particles is selected, the refractive index of the filler particles becomes close to that of the resin, and the internal transmittance of the resin composition can be raised with ease. Crystal that is represented by the chemical formula $LiM^1M^2X_6$ and is not doped with a lanthanoid element or the like is more favorable.

The content of the filler particles is favorably about 20% or more, particularly favorably about 50% or more when the volume of the inorganic fluorescent substance particles is 100%. With such a percentage, the effect of suppressing separation of the inorganic fluorescent substance particles is sufficiently exerted. It should be noted that the upper limit of the mixing ratio of the filler particles in the resin composition is not particularly limited. In particular, when significantly lowering the volume fraction of the inorganic fluorescent substance particles for the purpose of dramatically raising the n/γ discrimination ability of the neutron scintillator, it is favorable to mix a large amount of filler particles so as to uniformly disperse the inorganic fluorescent substance particles. However, considering the viscosity and the like in producing the resin composition, the volume fraction of the filler particles with respect to the entire resin composition is favorably smaller than 80 volume%, more favorably smaller than 50 volume%.

The shape of the filler particles is not particularly limited, but it is favorable for the filler particles to take the same shape as the inorganic fluorescent substance particles or the filler particles to be of a size equal to or smaller than the inorganic fluorescent substance particles for filling the gaps among the inorganic fluorescent substance particles.

In this embodiment, the resin composition may be used as a slurry- or paste-type resin composition in which the inorganic fluorescent substance particles and the liquid or viscous resin are mixed or may be used as a solid-type resin composition obtained by mixing the inorganic fluorescent substance particles and a liquid or viscous resin precursor and then curing the resin precursor.

The method of producing the resin composition constituting the neutron scintillator of this embodiment is not particularly limited, but the resin composition can be produced favorably as follows. Specifically, when using the resin composition of this embodiment as a slurry- or paste-type resin composition, the inorganic fluorescent substance particles are first mixed with the liquid or viscous resin. In this mixing operation, a well-known mixing machine such as a propeller mixer, a planetary mixer, and a butterfly mixer can be used without being limited in particular. At this time, the neutron-insensitive fluorescent substance may be mixed (dissolved when having solubility) in advance with the resin, or mixed simultaneous with or after the inorganic fluorescent substance particles.

Next, it is favorable to defoam the air bubbles generated in the resin composition in the mixing operation. In the defoaming operation, a defoaming machine such as a vacuum defoaming machine and a centrifugal defoaming machine can be used without being limited in particular. By performing such a defoaming operation, unnecessary scattering of light due to air bubbles can be suppressed.

It should be noted that in the mixing operation and the defoaming operation, an organic solvent may be added to the resin composition for the purpose of lowering the viscosity of the resin composition and efficiently performing the mixing and defoaming.

When a solid-type resin composition is used in this embodiment, the mixing operation and the defoaming operation are carried out similarly using the liquid or viscous resin precursor. Next, the obtained mixture of the inorganic fluorescent substance particles and the resin precursor is injected into a mold of a desired shape, and the resin precursor is cured. The curing method can be selected as appropriate according to the used resin precursor and is not particularly limited, but a method of polymerizing the resin precursor by heating, ultraviolet ray irradiation, or catalyst addition is favorable.

The neutron scintillator constituted of the resin composition of this embodiment can be used as a slurry type or a paste type or shaped by a mold of a desired shape even when a solid type is used, with the result that the neutron scintillator can easily take an arbitrary shape. Therefore, according to this embodiment, a fiber-type, hollow-tube-type, or large-area neutron scintillator can be provided according to intended use.

The neutron detector of this embodiment is obtained by combining the neutron scintillator and the optical detector. Specifically, since light emitted from the neutron scintillator by the entering of neutrons is converted into electrical signals by the optical detector and the entering of neutrons is measured as the electrical signals, the neutron detector can be used for counting neutrons and the like. In this embodiment, the optical detector is not particularly limited, and well-known optical detectors of the related art, such as a general photomultiplier tube, photodiode, avalanche photodiode, and Geiger mode avalanche photodiode can be used without any limitations. It should be noted that when the optical detector is used under a high-temperature environment of 100 to 200°C, it is favorable to use a high-temperature photomultiplier tube having an excellent operation property in such a temperature range. Specific examples of the high-temperature photomultiplier tube include R3991A, R1288A, R1288AH, and R5473-02 available from Hamamatsu Photonics K.K. The neutron detector usable under such a high-temperature environment can be particularly favorably used in the field of resource exploration and the like.

It should be noted that the neutron scintillator of this embodiment includes a light-emitting surface opposing the optical detector, and the light-emitting surface is favorably a smooth surface. By providing such a light-emitting surface, light generated in the neutron scintillator can efficiently enter the optical detector. Moreover, by forming a light reflective film formed of aluminum, polytetrafluoroethylene, or the like on a surface not opposing the optical detector, light generated in the neutron scintillator can be prevented from dissipating, which is favorable.

The method of producing the neutron detector by combining the neutron scintillator and the optical detector according to this embodiment is not particularly limited. For example, the neutron detector can be produced by optically bonding the light-emitting surface of the neutron scintillator to the light detection surface of the optical detector by optical grease, optical cement, and the like and connecting a power supply and a signal readout circuit to the optical detector. It should be noted that the signal readout circuit is generally constituted of a pre-amplifier, a shaping amplifier, an analog/digital converter, and the like, and the waveform analysis mechanism or wavelength analysis mechanism is added thereto in this embodiment.

Further, by arranging a large number of neutron scintillators on each of which the light reflective film has been formed and using a position-sensitive optical detector as the optical detector, a position resolution ability can be imparted to the neutron detector.

Examples

Hereinafter, examples of the present invention will be described in detail, but the present invention is not to be limited in any way by those examples. In addition, combinations of features described in the examples are not all essential as the solving means of the present invention.

Example 1

In this example, a neutron scintillator constituted of a resin composition including Eu:LiCaAlF$_6$ crystal doped with 0.04 mol% of Eu as the inorganic fluorescent substance particles and 2,5-Dipheniloxazole as the neutron-insensitive fluorescent substance was used to produce a neutron detector. It should be noted that the fluorescence lifetimes of Eu:LiCaAlF$_6$ and 2,5-Dipheniloxazole are 1600 nsec and 2 nsec, respectively.

The Eu:LiCaAlF$_6$ crystal includes only lithium-6 as the neutron capture isotope. The density of the Eu:LiCaAlF$_6$ crystal was 3.0 g/cm$^3$, the mass fraction of lithium was 3.2 mass%, and the isotope ratio of lithium-6 in the raw material was 95%. Therefore, the neutron capture isotope content was 9.1 atom/nm$^3$ from the expression (1) above.

Further, as a result of irradiating radiation onto the Eu:LiCaAlF$_6$ crystal and measuring the emission wavelength of the Eu:LiCaAlF$_6$ crystal using a fluorometer, the emission wavelength was 370 nm. It should be noted that the radiation are $\alpha$ rays as one of the secondary particles generated during the neutron irradiation, and Am-241 was used as the radiation source.

In producing the inorganic fluorescent substance particles constituted of the Eu:LiCaAlF$_6$ crystals, a bulk body of the Eu:LiCaAlF$_6$ crystal having an indefinite shape of about 2 cm square was prepared first, the bulk body was pulverized by a hammer mill and then classified by dry classification, and particles that have passed through an upper sieve having an opening of 200 $\mu$m and remained in a lower sieve having an opening of 100 $\mu$m were collected to obtain inorganic fluorescent substance particles having an indefinite shape.

A specific surface area of a mass scale of the inorganic fluorescent substance particles was 0.015 m$^2$/g when measured with a BET specific surface area analyzer. Therefore, the surface area per unit volume was 450 cm$^2$/cm$^3$.

In this example, filler particles constituted of LiCaAlF$_6$ crystal were used. The density of the LiCaAlF$_6$ crystal was 3.0 g/cm$^3$, the mass fraction of lithium was 3.7 mass%, and the isotope ratio of lithium-6 in the raw material was 7.6%. Therefore, the neutron capture isotope content was 0.73 atom/nm$^3$ from the expression (1) above. In addition, the specific gravity of the LiCaAlF$_6$ crystal was the same as that of the Eu:LiCaAlF$_6$ crystal and was 3.0 g/cm$^3$.

As the filler particles constituted of the LiCaAlF$_6$ crystal, particles obtained by pulverizing a bulk body in a similar way as the inorganic fluorescent substance particles and collecting those that have passed through the sieve having an opening of 100 $\mu$m were used.

In this example, a silicone resin (KER-7030 available from Shin-Etsu Chemical Co., Ltd.) was used as the resin. The resin is constituted of two liquids, that is, an A liquid and a B liquid, and the two liquids of the same amount were mixed to prepare a resin precursor. After that, the resin precursor was cured by heating so as to be usable. Moreover, the resin is a transparent resin that has an internal transmittance of 95%/cm in the emission wavelength of the Eu:LiCaAlF$_6$ crystal of 370 nm.

The refractive indices of the inorganic fluorescent substance particles constituted of the Eu:LiCaAlF$_6$ crystal, the filler particles constituted of the LiCaAlF$_6$ crystal, and the silicone resin at 370 nm at room temperature were measured using a refractometer. It should be noted that in measuring the refractive indices, bulk bodies of the Eu:LiCaAlF$_6$ crystal and LiCaAlF$_6$ crystal having a predetermined shape suited for the measurement and a bulk body of the resin were used. As light sources of the refractometer, i rays (365.0 nm) and h rays (404.7 nm) of a Hg lamp were used. After obtaining constants A and B by substituting the wavelengths of the light sources and the refractive indices measured at those wavelengths into the Sellmeier's expression (4), the refractive indices at 370 nm were calculated using the same expression. As a result, the refractive indices of the Eu:LiCaAlF$_6$ crystal, the LiCaAlF$_6$ crystal, and the silicone resin at 370 nm were 1.40, 1.40, and 1.41, respectively, and the ratio of the refractive index of the transparent resin to that of the inorganic fluorescent substance particles and the ratio of the refractive index of the transparent resin to that of the filler particles were both 1.01.

The neutron scintillator of this example was produced by the following method. First, 19.9 g of a resin precursor of a silicone resin obtained by mixing the same amount of A liquid and B liquid was prepared, and 2.0 g of a toluene solution in which 5 mass% of 2,5-Dipheniloxazole has been dissolved in advance was added thereto and stirred well. After that, toluene was distilled away in vacuum to obtain a resin precursor of a silicone resin including 0.5 mass% of 2,5-Dipheniloxazole.

10.0 g of the inorganic fluorescent substance particles constituted of the Eu:LiCaAlF$_6$ crystal, 10.0 g of the filler particles constituted of the LiCaAlF$_6$ crystal, and 11.0 g of the resin precursor of the silicone resin were put in a mixing vessel and mixed well with a stirrer. After that, air bubbles generated in the mixture during the mixing operation were defoamed using a vacuum defoaming machine.

Next, the mixture was poured into molds formed of polytetrafluoroethylene, that have a diameter of 2 cm and thicknesses of about 0.3 cm and about 1 cm, respectively, and was heated at 80°C for 5 hours and then heated at 100°C for 24 hours to cure the resin precursor. As a result, the neutron scintillator of this example constituted of the resin composition including the inorganic fluorescent substance particles and the neutron-insensitive fluorescent substance was obtained.

The resin composition had a diameter of 2 cm, a thickness of 0.3 cm, and a volume of 0.94 mL. In addition, the resin composition included 0.56 g each of the inorganic fluorescent substance particles and the filler particles, and volumes thereof were both 0.19 mL from the densities of the inorganic fluorescent substance particles and the filler particles. Therefore, the volume fraction of the inorganic fluorescent substance particles in the resin composition was 20 volume%, and the mixing ratio of the filler particles in the resin composition was 20 volume% with respect to the entire resin composition.

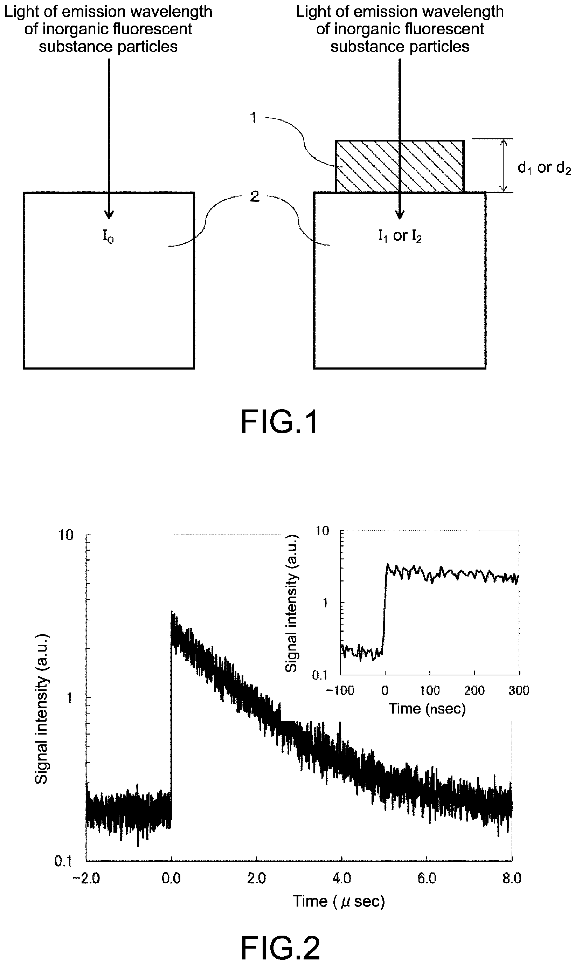

Regarding the resin composition, the internal transmittance per 1 cm of the optical path length at the emission wavelength of the inorganic fluorescent substance particles (370 nm) was measured by the following method. First, light having a wavelength of 370 nm was caused to enter the light detection surface of the optical detector as shown in the diagram on the left-hand side of Fig. 1, and the intensity of the incident light ($I_0$) was measured. Next, a resin composition having a diameter of 2 cm and a thickness of 0.3 cm ($d_1$) was placed on the light detection surface of the optical detector as shown in the diagram on the right-hand side of Fig. 1, and light having a wavelength of 370 nm was caused to enter to thus measure the intensity ($I_1$) of light that has entered the optical detector via the resin composition having the thickness of 0.3 cm ($d_1$). By dividing $I_1$ by $I_0$, a transmittance ($T_1$) including the surface reflectance loss of the resin composition having the thickness of 0.3 cm ($d_1$) was obtained. Similarly, the intensity ($I_2$) of light that has entered the optical detector via the resin composition having a thickness of 1 cm ($d_2$) was measured to thus obtain a transmittance ($T_2$) including the surface reflectance loss of the resin composition. As a result of calculating the internal transmittance per 1 cm of the optical path length by substituting the values of $d_1$, $d_2$, $T_1$, and $T_2$ into the expression (3), the internal transmittance was 68%/cm.

The neutron detector of this example was produced by connecting the neutron scintillator constituted of the resin composition having the diameter of 2 cm and the thickness of 0.3 cm to the optical detector. First, a surface of the neutron scintillator having a diameter of 2 cm was set as the light-emitting surface, and tape-type polytetrafluoroethylene was wound around surfaces other than the light-emitting surface to be used as light reflective films. Next, a photomultiplier tube (H6521 available from Hamamatsu Photonics K.K.) was prepared as the optical detector, and the light detection surface of the photomultiplier tube and the light-emitting surface of the neutron scintillator were optically bonded by optical grease. After that, the neutron scintillator and the optical detector were covered by a light-blocking black sheet.

The power supply was connected to the photomultiplier tube, and a signal output of the photomultiplier tube was connected to the digital oscilloscope to thus obtain the neutron detector of this example.

The performance of the neutron detector of this example was evaluated by the following method. It should be noted that when irradiating neutrons, Cf-252 having radioactivity of 2.4 MBq was placed at the center of high-density polyethylene of 20 cm cube, the neutron detector was set such that the neutron scintillator is placed near the high-density polyethylene, and neutrons from Cf-252 were irradiated while being moderated by the high-density polyethylene. On the other hand, when irradiating $\gamma$ rays, Co-60 having radioactivity of 0.83 MBq was placed 5 cm from the neutron scintillator to irradiate $\gamma$ rays from Co-60. The dose of the $\gamma$ rays at the positon 5 cm from Co-60 having radioactivity of 0.83 MBq was as high as 10 mR/h.

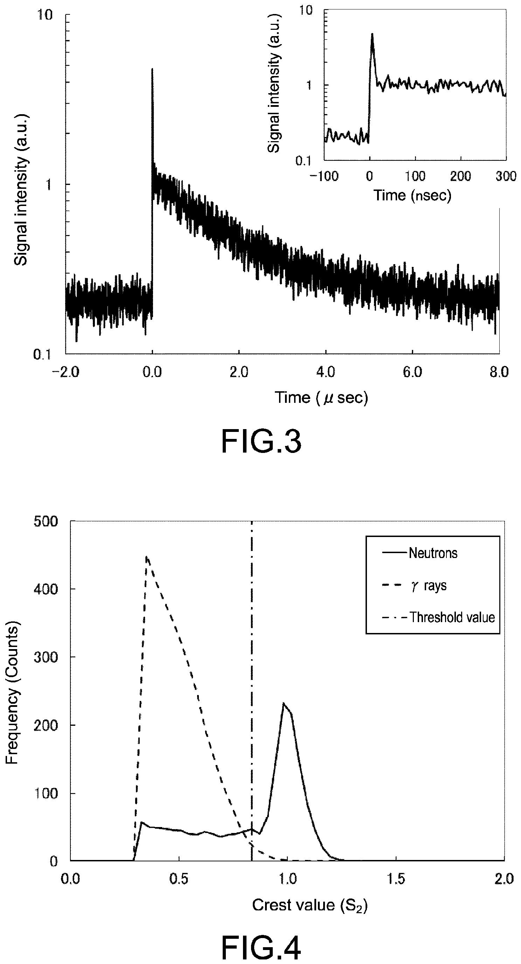

Using the power supply connected to the photomultiplier tube, a high voltage of -1300 V was applied to the photomultiplier tube. Neutrons or $\gamma$ rays were irradiated individually, light emitted from the neutron scintillator due to the entering of those radiation was converted into pulse-type electrical signals by the photomultiplier tube, and the electrical signals were digitized and recorded by the digital oscilloscope. The pulse signals obtained by the neutron irradiation and the $\gamma$ ray irradiation are shown in Figs. 2 and 3, respectively. It should be noted that the insertion diagram of each figure is an enlarged diagram of the graph near the time 0. It can be seen from Figs. 2 and 3 that only the inorganic fluorescent substance particles having a long fluorescence lifetime emit fluorescence when the neutrons enter and both the inorganic fluorescent substance particles and the neutron-insensitive fluorescent substance having a short fluorescence lifetime emit fluorescence when the $\gamma$ rays enter.

For the obtained digital signals, the signal intensities within the time range up to an elapse of 500 nsec from the rise of the signals were integrated to acquire pulse heights ($S_2$) of a long time range. Taking $S_2$ on the abscissa axis and a frequency of the event that has indicated the values of $S_2$ on the ordinate axis, pulse height spectra were created.

The obtained pulse height spectra are shown in Fig. 4. The solid line and dotted line of Fig. 4 are pulse height spectra under the neutron irradiation and the $\gamma$ ray irradiation, respectively. It should be noted that in the pulse height spectra, the abscissa axis is expressed by relative values with a pulse height of a neutron peak as 1.

It can be seen from Fig. 4 that the pulse heights of the electrical signals generated by the entering of the $\gamma$ rays are basically smaller than the pulse height of the neutron peak but are partially the same level as the neutron peak. Therefore, when a predetermined threshold value is set for the pulse heights and the event that has indicated a pulse height exceeding the threshold value is counted as a neutron incident event, there is a fear that a $\gamma$ ray incident event that indicates a pulse height of the same level as the neutron peak will be erroneously counted as the neutron incident event.

Fitting was performed on the neutron peak using a normal distribution function to obtain a dispersion ($\sigma$), and a threshold value was set at a pulse height 3 $\sigma$ lower than the pulse height of the neutron peak. The threshold value is indicated by the chain line of Fig. 4. As a result of counting the frequency of signals exceeding the threshold value for 300 seconds in the case where γ rays are irradiated and calculating a count rate (counts/sec), the count rate was 0.21 counts/sec and it can be seen that an error derived from the γ rays with respect to the neutron count was slightly generated.

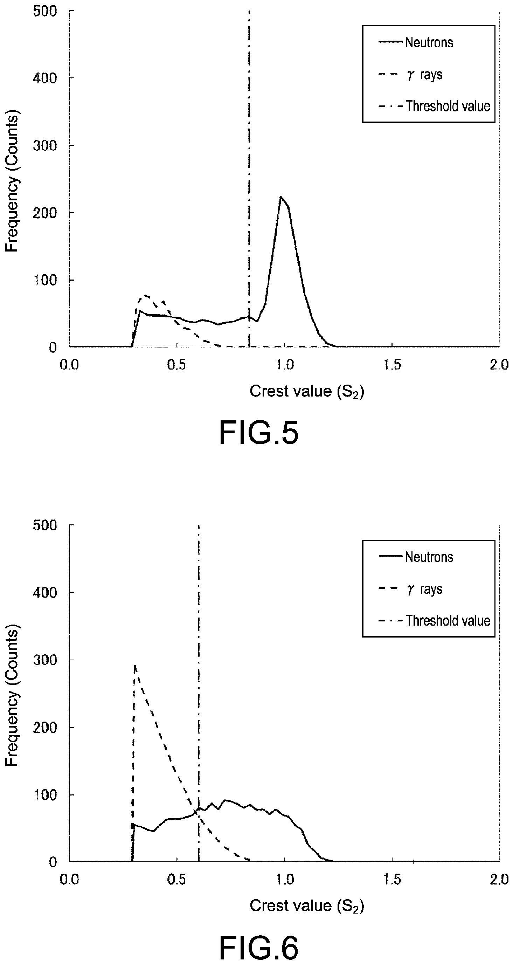

For removing the error derived from the γ rays, the neutrons and γ rays were discriminated using the waveform analysis mechanism. For the digital signals, pulse heights ($S_1$) of a short time range up to an elapse of 5 nsec from the rise of signals were acquired in addition to $S_2$. In creating the pulse height spectra using $S_2$, an event whose $S_1/S_2$ does not satisfy a predetermined threshold value is removed as the γ ray incident event. The pulse height spectra obtained as described above are shown in Fig. 5.

It can be seen from Fig. 5 that the γ ray incident event that indicates a pulse height of the same level as the neutron peak has been removed.

Similarly, as a result of counting the frequency of signals exceeding the threshold value for 300 seconds in the case where γ rays are irradiated and calculating the count rate (counts/sec), the count rate was 0 counts/sec. Thus, it can be seen that by using the neutron scintillator constituted of the resin composition including the inorganic fluorescent substance and the neutron-insensitive fluorescent substance according to this example, a neutron detector having an excellent n/γ discrimination ability can be obtained.

Example 2

A neutron scintillator constituted of a resin composition was produced in the similar manner as in Example 1 except that a silicone resin having a refractive index of 1.62 at 370 nm and an internal transmittance of 92% was used in place of the silicone resin of Example 1. In this example, the ratio of the refractive index of the resin to that of the inorganic fluorescent substance particles and the ratio of the refractive index of the resin to that of the filler particles were both 1.19. Further, the volume fraction of the inorganic fluorescent substance particles in the resin composition was 20 volume%, and the mixing ratio of the filler particles in the resin composition was 20 volume% with respect to the entire resin composition.

The resin composition was opaque since the refractive indices of the inorganic fluorescent substance particles and the filler particles did not match with that of resin. The internal transmittance of the resin composition per 1 cm of the optical channel length at the emission wavelength of the inorganic fluorescent substance particles was 26%/cm when measured similarly as in Example 1.

Similar to Example 1, the neutron detector was produced using the resin composition, light emitted from the neutron scintillator was converted into pulse-type electrical signals by the photomultiplier tube, and the electrical signals were digitized and recorded by the digital oscilloscope. Similar to Example 1, fluorescence of only the inorganic fluorescent substance particles having a long fluorescence lifetime was observed under the neutron irradiation, and fluorescence of the neutron-insensitive fluorescent substance having a short fluorescence lifetime was observed in addition to the fluorescence of the inorganic fluorescent substance particles under the γ ray irradiation.

Similar to Example 1, pulse heights ($S_2$) were acquired from the obtained digital signals, and pulse height spectra were created using $S_2$.

The obtained pulse height spectra are shown in Fig. 6. The solid line and dotted line of Fig. 6 are pulse height spectra under the neutron irradiation and the γ ray irradiation, respectively.

In Fig. 6, no clear neutron peak is found since the resin composition is opaque, and thus it is difficult to set a threshold value for the pulse heights. Here, the threshold value is set at a point where the pulse height is 0.6 for descriptive purposes. As a result of counting the frequency of signals exceeding the threshold value for 300 seconds and calculating the count rate (counts/sec) for the case where the γ rays are irradiated, the count rate was 0.84 counts/sec.

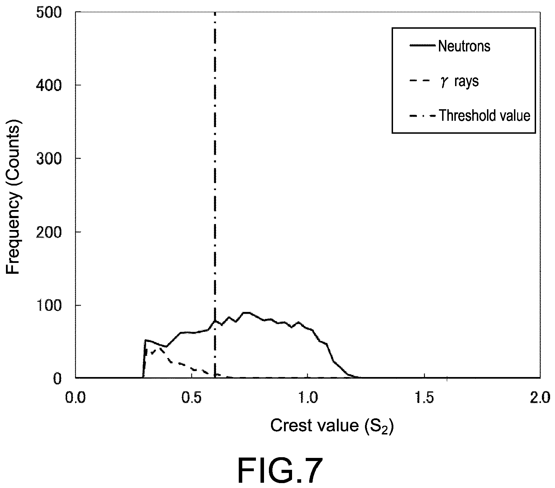

Next, similar to Example 1, the pulse height spectra were created after discriminating the neutrons and γ rays using the waveform analysis mechanism. The obtained pulse height spectra are shown in Fig. 7. Similarly, a threshold value (chained line of Fig. 7) is set for the pulse heights. As a result of counting the frequency of signals exceeding the threshold value for 300 seconds and calculating the count rate (counts/sec) for the case where the γ rays are irradiated, the count rate was 0.03 counts/sec. Thus, it can be seen that by using the neutron scintillator constituted of the resin composition including the inorganic fluorescent substance and the neutron-insensitive fluorescent substance according to this example, a neutron detector having an excellent n/γ discrimination ability even when the transparency of the scintillator is poor can be obtained. Description of Reference Numerals

1    neutron scintillator
2    optical detector

**Claims**

1.  A neutron scintillator, **characterized by** comprising
    a resin composition including

    inorganic fluorescent substance particles including at least one type of neutron capture isotope selected from lithium-6 and boron-10, and
    a fluorescent substance that does not include the neutron capture isotope and has a different fluorescence property from the inorganic fluorescent substance particles.

2.  The neutron scintillator according to claim 1,
    wherein a ratio of a refractive index of the resin to that of the inorganic fluorescent substance particles in an emission wavelength of the inorganic fluorescent substance particles is within the range of 0.90 to 1.10.

3.  The neutron scintillator according to claim 1 or 2,
    wherein the fluorescent substance not including the neutron capture isotope is dissolved in a resin component constituting the resin composition.

4.  The neutron scintillator according to any one of claims 1 to 3,
    wherein all the inorganic fluorescent substance particles pass through a sieve having an opening of 1000 $\mu$m, and the inorganic fluorescent substance particles substantially do not include particles that pass through a sieve having an opening of 100 $\mu$m.

5.  A neutron detector, **characterized by** comprising:

    the neutron scintillator according to any one of claims 1 to 4; and
    an optical detector.


**Patentansprüche**

1.  Neutronenszintillator,
    **dadurch gekennzeichnet, dass** er aufweist
    eine Harzzusammensetzung umfassend

    anorganische fluoreszierende Substanzpartikel umfassend wenigstens eine Art eines Neutroneneinfangisotops, das aus Lithium-6 und Boron-10 ausgewählt ist, und
    eine fluoreszierende Substanz, die nicht das neutroneneinfangende Isotop umfasst und eine abweichende fluoreszierende Eigenschaft von der der anorganischen fluoreszierenden Substanzpartikel hat.

2.  Neutronenszintillator nach Anspruch 1,
    wobei ein Verhältnis eines Brechungsindexes des Harzes zu dem der anorganischen fluoreszierenden Substanzpartikel in einer Emissionswellenlänge der anorganischen fluoreszierenden Substanzpartikel innerhalb des Bereichs von 0,90 bis 1,10 liegt.

3.  Neutronenszintillator nach Anspruch 1 oder 2,
    wobei die fluoreszierende Substanz, die nicht das neutroneneinfangende Isotop umfasst, in einer Harzkomponente gelöst ist, die die Harzzusammensetzung bildet.

4.  Neutronenszintillator nach einem der Ansprüche 1 bis 3,
    wobei alle anorganischen fluoreszierenden Substanzpartikel durch ein Sieb passen, das eine Durchlässigkeit von 1.000 $\mu$m hat, und wobei die anorganischen fluoreszierenden Substanzpartikel im Wesentlichen keine Partikel umfassen, die durch ein Sieb hindurchgehen, das eine Durchlässigkeit von 100 $\mu$m hat.

5.  Neutronendetektor,
    **dadurch gekennzeichnet, dass** er aufweist:

    den Neutronenszintillator nach einem der Ansprüche 1 bis 4; und

einen optischen Detektor.

**Revendications**

1. Scintillateur à neutrons, **caractérisé en ce qu'**il comprend
une composition de résine comprenant
des particules d'une substance inorganique fluorescente comprenant au moins un type d'isotope de capture de neutrons sélectionné parmi le lithium-6 et le bore-10, et
une substance fluorescente qui ne comporte pas d'isotope de capture de neutron et qui a une propriété de fluorescence différente des particules de substance inorganique fluorescente.

2. Scintillateur à neutrons, selon la revendication 1,
dans lequel un rapport de l'indice de réfraction de la résine par rapport à celui des particules de substance inorganique fluorescente, dans une longueur d'onde d'émission des particules de substance inorganique fluorescente est compris dans l'intervalle de 0.90 à 1.10.

3. Scintillateur à neutrons, selon les revendications 1 ou 2,
dans lequel la substance fluorescente ne comprenant pas l'isotope de capture de neutrons est dissoute dans un composant de résine constituant la composition de résine.

4. Scintillateur à neutrons, selon l'une quelconque des revendications 1 à 3,
dans lequel toutes les particules de substance inorganique fluorescente passent à travers un tamis ayant une ouverture de 1000 $\mu$m, et les particules de substance inorganique fluorescente ne contiennent pratiquement pas de particules qui passent à travers un tamis ayant une ouverture de 100 $\mu$m.

5. Détecteur à neutrons, **caractérisé en ce qu'**il comprend :

   un scintillateur à neutrons, selon l'une quelconque des revendications 1 à 4 ; et
   un détecteur optique.

Light of emission wavelength
of inorganic fluorescent
substance particles

Light of emission wavelength
of inorganic fluorescent
substance particles

FIG.1

FIG.2

FIG.3

FIG.4

FIG.5

FIG.6

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009119378 A
- US 2010224783 A1
- US 2009140158 A1
- US 2013193329 A1
- JP 2012271318 A